# EUROPÄISCHE PATENTANMELDUNG

(11) **EP 1 710 708 A2**
(43) Veröffentlichungstag der Anmeldung: **11.10.2006**
(21) Anmeldenummer: 06004092.0
(22) Anmeldetag: 01.03.2006
(51) Int. Cl.: G06F 13/38, G11B 20/10, G06F 3/02

(54) **Einrichtung zur Übertragung von Daten**

(30) Priorität: 07.04.2005 DE 102005016205
(71) Anmelder: RAFI GmbH & Co. KG, 88276 Berg (DE)
(72) Erfinder: Beutler, Detlef, 88250 Weingarten (DE)
(74) Vertreter: Engelhardt, Volker

(57) **Zusammenfassung**

Bei einer Einrichtung (3) zur Übertragung von Daten zur Steuerung einer Recheneinheit (1), bestehend aus mindestens einem Ein- oder Ausgabegerät (7 bis 17), das jeweils über eine Busschnittstelle (4, 6) mit der Recheneinheit (1) gekoppelt ist, sollen eine oder mehrere Aus- und/ oder Eingabegeräte (7 bis 17) an die Recheneinheit (1) anschließbar sein.

Dies wird dadurch erzielt, dass alle der Recheneinheit (1) zugeordneten Ein- und Ausgabegeräte (7 bis 17) an dieser über eine gemeinsame Busschnittstelle (4, 6) angeschlossen sind und dass durch die Busschnittstelle (4, 6) die Ein- und/oder Ausgabegeräte (7 bis 17) mit der Recheneinheit (1) kommunizieren.

## Beschreibung

Die Erfindung bezieht sich auf eine Einrichtung zur Übertragung von Daten zur Steuerung einer Recheneinheit, bestehend aus mindestens einem Ein- und/oder Ausgabegerät, das jeweils über eine Busschnittstelle mit der Recheneinheit gekoppelt ist.

Es ist bekannt, eine Vielzahl von Ein- und Ausgabegeräten an eine Recheneinheit, beispielsweise einen Personalcomputer, anzuschließen. Die Eingabegeräte bestehen üblicherweise aus einer Tastatur und einer Maus, die über ein Kabel mit der Busschnittstelle oder mittels Funkübertragungsantennen verbunden sind.

Jedem der Eingabegeräte ist dabei eine bestimmte Schnittstelle zugeordnet, so dass die Recheneinheit ohne weiteres auswerten kann, von welchem Eingabegerät welche Signale zur Bedienung und Steuerung der Recheneinheit ausgegeben worden sind. Gleichzeitig überträgt die Recheneinheit über eine weitere Busschnittstelle die entsprechenden Daten, beispielsweise auf einen Bildschirm, auf dem die eingegebenen und weiterverarbeiteten Daten angezeigt werden.

Als nachteilig bei einem solchen Aufbau sowie der Datenübertragung zwischen den Eingabe- und Ausgabegeräten und der Recheneinheit hat sich herausgestellt, dass jedem Eingabe- und Ausgabegerät eine bestimmte Schnittstelle zuzuweisen ist, um die Kommunikation zwischen der Recheneinheit und den Ein- und Ausgabegeräten zu gewährleisten. Üblicherweise sind daher an der Recheneinheit verschiedenartig ausgebildete Schnittstellen vorzusehen, in die die einzelnen Kabel der Ein- und Ausgabegeräte einzustecken sind. Zum Einen führt dies bei dem Benutzer zu Schwierigkeiten, da die Vielzahl der vorhandenen Kabel äußerst unübersichtlich angeordnet sind und daher Störungen, beispielsweise dadurch bedingt, dass ein Kabel aus der Schnittstelle rutscht, nicht auf einfache und schnelle Art und Weise behoben werden können.

Darüber hinaus ist eine solche Anordnung einer Vielzahl von Schnittstellen sowie Ein- und Ausgängen kostenintensiv, denn für jedes Ein- und Ausgabegerät muss ein Steckplatz vorgesehen werden. Die Anzahl der Schnittstellen ist üblicherweise begrenzt, so dass nachdem sämtliche Schnittstellen mit Ein- und Ausgabegeräten belegt sind, zusätzliche Ein- und Ausgabegeräte nicht mehr direkt angeschlossen werden können oder aber der Benutzer nicht benötigte Ein- und Ausgabegeräte absteckt und die frei gewordenen Schnittstellen weiteren Ein- und Ausgabegeräten zuweisen kann.
Eine solche Vorgehensweise ist jedoch äußerst umständlich und zeitintensiv.

Es ist daher Aufgabe der Erfindung, eine Einrichtung zur Übertragung von Daten der eingangs genannten Gattung bereitzustellen, mittels der eine Vielzahl von Ein- und Ausgabegeräten an eine oder mehrere Recheneinheiten angeschlossen werden können, ohne dass der Benutzer sowohl in der Anzahl der verwendeten Ein- und Ausgabegeräte als auch durch die Anzahl der zur Verfügung stehenden Schnittstellen eingeschränkt ist.

Diese Aufgabe wird dadurch gelöst, dass alle der Recheneinheit zugeordneten Ein- und Ausgabegeräte an dieser über eine gemeinsame Busschnittstelle angeschlossen sind und dass durch die Busschnittstelle die Ein- und/oder Ausgabegeräte mit der Recheneinheit kommunizieren.

Weitere vorteilhafte Weiterbildungen der Erfindung ergeben sich aus den Unteransprüchen.

Durch die eine vorhandene Busschnittstelle, die vorzugsweise als USB 2.0 oder als Drehtore USB ausgebildet ist, können demnach eine Vielzahl von Ein- und Ausgabegeräten mit der Recheneinheit verbunden werden, so dass die Kommunikation zwischen der Recheneinheit und den Ein- und Ausgabegeräten über eine Busschnittstelle erfolgt. An die Busschnittstelle können vorteilhafterweise eine Vielzahl von Ein- und Ausgabegeräten angeschlossen werden, so dass deren Anzahl in ausreichender Menge möglich ist.

Des Weiteren hat sich als Vorteil gegenüber dem bekannten Stand der Technik herausgestellt, dass die Übertragungseinrichtung nicht mit einer eigenständigen Recheneinheit auszustatten ist, denn die Zuordnung der zu übertragenden Daten zwischen der Recheneinheit und den Ein- und Ausgabegeräten bzw. vice versa, erfolgt durch die vorhandene Busschnittstelle. Dadurch wird der Aufwand zur Verkabelung der einzelnen Ein- und Ausgabegeräte mit der Recheneinheit erheblich reduziert. Dies beinhaltet Kosteneinsparungen, denn für die Vielzahl der Ein- und Ausgabegeräte ist lediglich eine Busschnittstelle vorzusehen, an die in geeigneter Weise zusätzliche Ein- und Ausgabegeräte anschließbar sind.

In der Zeichnung sind zwei erfindungsgemäße Ausführungsbeispiele schematisch dargestellt, die nachfolgend näher erläutert werden. Im Einzelnen zeigt:
- Figur 1: ein erstes Ausführungsbeispiel einer an eine Recheneinheit angeschlossene Übertragungseinrichtung, die miteinander über eine verkabelte Schnittstelle kommunizieren, und
- Figur 2: ein zweites Ausführungsbeispiel einer an eine Recheneinheit angeschlossene Übertragungseinrichtung, die miteinander über Empfangs- und Sendeantennen kommunizieren.

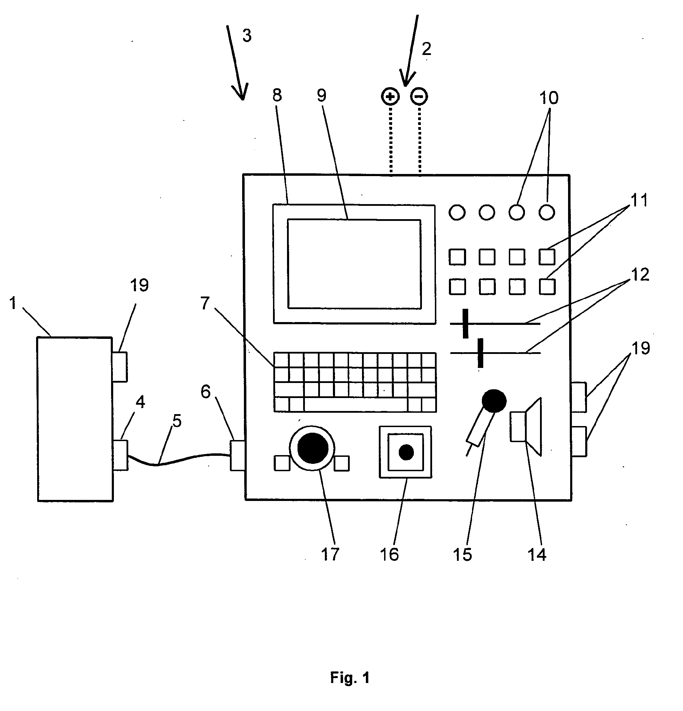

In Figur 1 ist eine Recheneinheit 1 dargestellt, die mit einer aus einer Vielzahl von nachfolgend näher erläuterten Ein- und Ausgabegeräten 7 bis 17 bestehende Übertragungseinrichtung 3 kommuniziert. Durch die einzelnen Ein- und Ausgabegeräte 7 bis 17 werden nämlich Daten zur Steuerung der Recheneinheit 1 über die Busschnittstellen 4 und 6, die jeweils über ein Kabel 5 miteinander verbunden sind, übertragen. Der Übertragungseinrichtung 3 sind beispielsweise die Eingabegeräte Tastenfeld 7, Touch Screen 8, Drehgeber 10, Eingabetasten 11 mit LED-Anzeige, Potentiometer 12, Mikrofon 15, Joystick 16 und Rollkugel 17 zugeordnet.

Die Übertragungseinrichtung 3 wird über eine Stromquelle 2 mit Energie versorgt, die auch an die Recheneinheit über die Schnittstelle 4, 6 und das Kabel 5 übertragen werden kann.

Die durch die Eingabegeräte erzeugten Daten werden über die Busschnittstellen 4 und 6 und das Kabel 5 an die Recheneinheit 1 gesandt. Durch die Busschnittstellen 4 und 6 wird ermittelt, von welchem Eingabegerät welche Daten stammen, so dass die Recheneinheit 1 diese Daten einem bestimmten Eingabegerät zuordnet und entsprechend auswertet.

Die von der Recheneinheit 1 ausgewerteten Daten werden über die Busschnittstellen 4 und 6 sowie das Kabel 5 an die Übertragungseinrichtung 3 zurückgeleitet, so dass beispielsweise auf den nachfolgend beschriebenen Ausgabegeräten entsprechende Informationen und Daten visualisiert oder hörbar gemacht sind. Die Ausgabegeräte umfassen beispielsweise einen LCD-Bildschirm 9 und einen Lautsprecher 14 zur Audioausgabe.

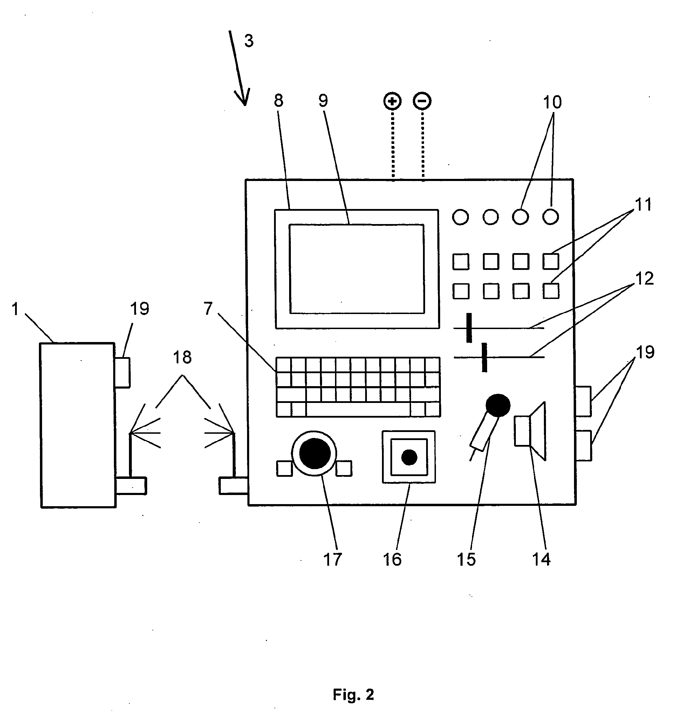

Aus Figur 2 ist ersichtlich, dass die Kommunikation zwischen der Recheneinheit 1 und der Übertragungseinrichtung 3 durch Funksignale erfolgt, die von zwei Empfangs- und Sendeantennen 18 übertragen werden.

Beiden Ausführungsbeispielen kann entnommen werden, dass sowohl an der Recheneinheit 1 als auch an der Übertragungseinrichtung 3 weitere zusätzliche Busschnittstellen 19 vorhanden sein können, die in der beschriebenen Art und Weise an die Recheneinheit 1 bzw. an die Übertragungseinrichtung 3 angeschlossen werden können. Die Anzahl der betriebenen Ein- und Ausgabegeräte 7 bis 17 ist daher beliebig erweiterbar und nicht auf eine bestimmte Anzahl begrenzt.

Die aufgeführten Ein- und Ausgabegeräte 7 bis 17 sind lediglich Beispiele für die möglichen Ein- und Ausgabegeräte, die an eine Recheneinheit 1 angeschlossen werden sollen. Jedes weitere Ein- und Ausgabegerät kann in üblicher Weise mit der Recheneinheit 1 über die Busschnittstellen 4, 6 bzw. 19 kommunizieren.

## Patentansprüche

1. Einrichtung (3) zur Übertragung von Daten zur Steuerung einer Recheneinheit (1), bestehend aus mindestens einem Ein- oder Ausgabegerät (7 bis 17), das jeweils über eine Busschnittstelle (4, 6) mit der Recheneinheit (1) gekoppelt ist,
**dadurch gekennzeichnet,**
**dass** alle der Recheneinheit (1) zugeordneten Ein- und Ausgabegeräte (7 bis 17) an dieser über eine gemeinsame Busschnittstelle (4, 6) angeschlossen sind und dass durch die Busschnittstelle (4, 6) die Ein- und/oder Ausgabegeräte (7 bis 17) mit der Recheneinheit (1) kommunizieren.

2. Übertragungseinrichtung nach Anspruch 1,
**dadurch gekennzeichnet,**
**dass** die von den jeweiligen Eingabegeräten (7 bis 17) stammenden Daten durch die Busschnittstelle (4, 6) diese jeweils einem Eingabegerät (7 bis 17) zuordbar sind und dass die von der Recheneinheit (1) übermittelten Daten an ein bestimmtes Ein- oder Ausgabegerät (7 bis 17) durch die Busschnittstelle (4, 6) an dieses übertragbar sind.

3. Übertragungseinrichtung nach Anspruch 1 oder 2,
**dadurch gekennzeichnet,**
**dass** die Busschnittstelle (4, 6) als USB 2.0 ausgebildet ist.

4. Übertragungseinrichtung nach einem oder
mehreren der vorgenannten Ansprüche,
**dadurch gekennzeichnet,**
**dass** die Busschnittstelle (4, 6) der Übertragungseinrichtung (3) und der Recheneinheit (1) durch ein Kabel (5) miteinander verbunden sind.

5. Übertragungseinrichtung nach einem oder
mehreren der Ansprüche 1 bis 3,
**dadurch gekennzeichnet,**
**dass** die Daten von der Busschnittstelle (4, 6) mittels Funksignale, die von zwei Antennen (18) empfangen und gesendet werden, von der Übertragungseinrichtung (3) an die Recheneinheit (1) oder vice versa übertragbar sind.

6. Übertragungseinrichtung nach Anspruch 5,
**dadurch gekennzeichnet,**
**dass** die Funkübertragung mittels wireless USB ausgeführt ist.

7. Übertragungseinrichtung nach einem oder mehreren
der vorgenannten Ansprüche,
**dadurch gekennzeichnet,**
**dass** mindestens eines der Eingabegeräte (7 bis 17) als Bildschirm mit einem Touch-Screen (8) ausgebildet ist und dass durch die Recheneinheit (1) auf den Bildschirm des Touch-Screen (8) Daten übertragbar sind.

8. Übertragungseinrichtung nach einem oder mehreren
der vorgenannten Ansprüche,
**dadurch gekennzeichnet,**
**dass** an der Recheneinheit (1) und/oder der Übertragungsreinrichtung (3) mehrere Busschnittstellen (19) eine Vielzahl von Übertragungseinrichtungen (3) vorhanden sind.
